(19)

Europäisches
Patentamt
European
Patent Office
Office européen
des brevets

(11) **EP 3 089 057 A2**

(12) **EUROPEAN PATENT APPLICATION**

(43) Date of publication:
**02.11.2016 Bulletin 2016/44**

(51) Int Cl.:
**G06F 17/50** (2006.01)

(21) Application number: **16157990.9**

(22) Date of filing: **01.03.2016**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **01.05.2015 GB 201507527**

(71) Applicant: **FUJITSU LIMITED**
**Kawasaki-shi,**
**Kanagawa 211-8588 (JP)**

(72) Inventors:
• **KUBOTA, Tetsuyuki**
  **Acton, London W3 0NX (GB)**
• **CHOW, Peter**
  **Gillingham, Kent ME7 3AH (GB)**
• **GEORGESCU, Serban**
  **London, W5 3JY (GB)**
• **AKIHIKO, Fujisaki**
  **Kawasaki-shi, Kanagawa 211-8588 (JP)**

(74) Representative: **Fenlon, Christine Lesley**
**Haseltine Lake LLP**
**Lincoln House, 5th Floor**
**300 High Holborn**
**London WC1V 7JH (GB)**

(54) **METHOD AND APPARATUS FOR USE IN THERMAL COUPLED ANALYSIS**

(57) In a method of carrying out thermal computational fluid dynamics - thermal CFD - analysis on a structure comprising a first part, a second part and a deformable third part located between and in contact with each of the first and second parts, a thermal CFD model of the structure is created using 3D-CAD software in which a volume of the structure, encompassing the third part, a portion of the first part which is adjacent to and includes a boundary between the first and third parts, and a portion of the second part which is adjacent to and includes a boundary between the second and third parts, is replaced by a notional fourth part, which has a uniform thickness greater than or equal to twice the size of mesh used to mesh the first and second parts. The shape of the third part as deformed under load is derived from structural analysis of a structural analysis model of the structure, and then a value for the thermal conductivity of the fourth part is calculated, based on a known value of the thickness of the fourth part, a known value of the thickness of the third part, the derived shape of the deformed third part, a known value of the thermal conductivity of the third part, and known values of the thermal conductivity of the portions of the first and second parts. Thermal-CFD analysis of the thermal CFD model is carried out using the calculated thermal conductivity of the fourth part.

FIG. 3

**Description**

The present application relates to a method and apparatus for use in thermal coupled analysis.

Structural and thermal coupled analysis of a structure is usually carried out based on a 3-dimensional computer-aided design (3D-CAD) geometrical model of the structure, in which features of the structure are represented by 3D mesh elements. In 3D-CAD models the mesh size of the mesh elements is dependent upon the size of the features to be modelled, such that for a small feature a large amount of mesh elements are required. The greater the number of mesh elements there are, the higher the computational cost will be.

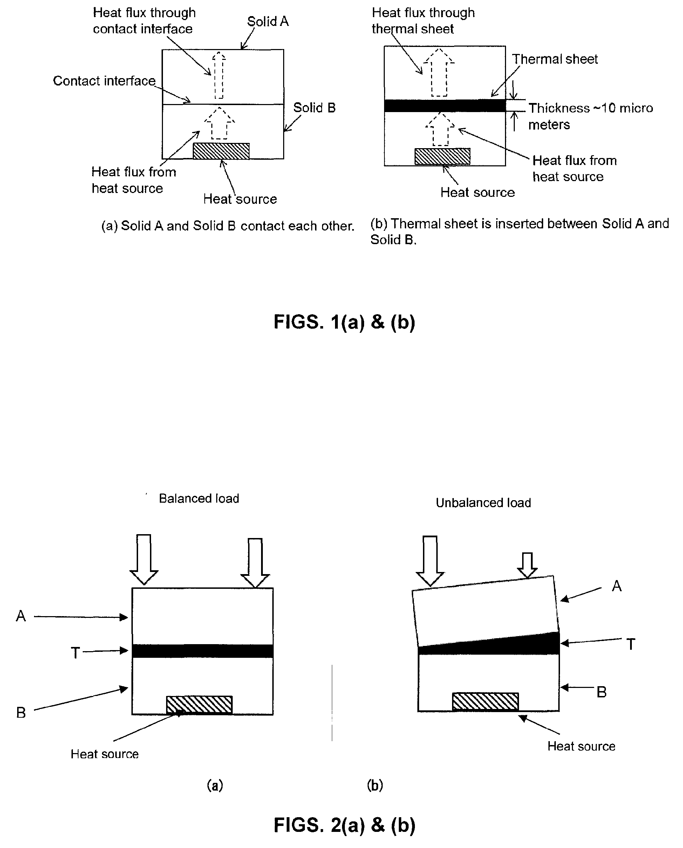

This is a particular issue in the creation and analysis of a thermal computational fluid dynamics (thermal-CFD) model based on a structure employing a thermal sheet. A typical example of such a structure is shown in Figure 1(b) of the accompanying drawings. As shown in Figure 1(a) of the accompanying drawings, in general a contact interface between metal solids A and B has a large thermal resistance. The thermal resistance is large at the boundary, so heat flux which is generated at a heat source in solid B is reduced in magnitude as it passes through the contact interface. As shown in Figure 1(b), to reduce the thermal resistance between two metal solids A and B, a thermal sheet T is inserted between them. Typically the sheet T has a uniform thickness of the order of 10 to 25 $\mu$m and is made of a material with some properties similar to rubber (for example, acrylic polymer, glass-reinforced polyamide, fibreglass-reinforced silicone) but with high heat conductivity. Therefore, using such a thermal sheet T, heat resistance between the metal solids A and B can be reduced.

In general, when used in such a structure, the thermal sheet T will be compressed by uniform force and will retain uniform thickness, as shown in Figure 2(a) of the accompanying drawings. However, if the load balance across the structure is broken for some reason, the thickness of the thermal sheet T will vary along its length, for example as shown in Figure 2(b) of the accompanying drawings. Such non-uniform deformation of the thermal sheet T has an effect on the thermal resistance of the thermal sheet T, which in turn changes the heat flux through the thermal sheet T.

This phenomenon has a significant influence on the thermal design. It is therefore important to predict how the thermal sheet T will deform under load and the consequent variation of heat flux.

Structural analysis is used to determine how the thermal sheet T will deform under load and a model for thermal-CFD analysis is generated from the result of the structural analysis. However, as the thickness of the thermal sheet T is of the order of only a few $\mu$m and the amount of deformation of the thermal sheet T is smaller than the thickness of thermal sheet T, a large number of mesh elements are required to represent the deformation of the thermal sheet T in the thermal-CFD analysis model.

Some software is available which can perform coupled simulation between structural analysis and thermal-CFD analysis, for example ANSYS (Simulation software for structural analysis, electro-magnetic analysis, CFD and coupled analysis - http://ansys.com/) and HyperWorks (Simulation software for structural analysis, electro-magnetic analysis, CFD and coupled analysis - http://www.altairhyperworks.co.uk/). Although such software can perform coupled analysis, it is necessary for the geometrical CAD model on which analysis is based to be the same for both the structural analysis simulation and the thermal-CFD analysis simulation. As mentioned above, if a small-scale feature exists in a geometrical CAD model, the mesh scale of the mesh elements must be large, and computational cost will be high.

It is desirable to reduce the computational cost of carrying out thermal-CFD analysis of a structure comprising small-scale features, such as a deformed thermal sheet.

According to an embodiment of a first aspect of the present invention there is provided a method of carrying out thermal computational fluid dynamics - thermal CFD - analysis on a structure comprising a first part, a second part and a deformable third part located between and in contact with each of the first and second parts, wherein: a thermal CFD model of the structure is created using 3D-CAD software in which a volume of the structure, encompassing the third part, a portion of the first part which is adjacent to and includes a boundary between the first and third parts, and a portion of the second part which is adjacent to and includes a boundary between the second and third parts, is replaced by a notional fourth part, which has a uniform thickness greater than or equal to twice the size of mesh used to mesh the first and second parts; the shape of the third part as deformed under load is derived from structural analysis of a structural analysis model of the structure; a value for the thermal conductivity of the fourth part is calculated, based on a known value of the thickness of the fourth part, a known value of the thickness of the third part, the derived shape of the deformed third part, a known value of the thermal conductivity of the third part, and known values of the thermal conductivity of the portions of the first and second parts; and thermal-CFD analysis of the thermal CFD model is carried out using the calculated thermal conductivity of the fourth part.

Preferably the fourth part is divided into N contiguous regions, each region comprising a first section $a_i$, of thickness $l_{ai}$ and thermal conductivity $\lambda_{ai}$, and a second section $b_i$ of thickness $l_{bi}$ and thermal conductivity $\lambda_{bi}$, such that the total thickness of each ith region is $l_{ai}+l_{bi}$, where i is an integer and $1 \leq i \leq N$; and the thermal conductivity of the fourth part by adding the thermal conductivity value of each first section $a_i$ derived from the equation:

$$\lambda_{ai} = \frac{l_{ai}}{\frac{l_{ai} - l_{Ti}}{\lambda_A} + \frac{L_{Ti}/2}{\lambda_T}}$$

and the thermal conductivity value of each second section $b_i$ derived from the equation:

$$\lambda_{bi} = \frac{l_{bi}}{\frac{l_{bi} - l_{Ti}}{\lambda_B} + \frac{L_{Ti}/2}{\lambda_T}}$$

where under balanced load the third part has a thermal conductivity $\lambda_T$ and a thickness $l_{Ti}$ at the ith region and under unbalanced load the third part has a thickness $L_{Ti}$ at the ith region.

According to an embodiment of a second aspect of the present invention there is provided apparatus for carrying out thermal computational fluid dynamics - thermal CFD - analysis on a structure comprising a first part, a second part and a deformable third part located between and in contact with each of the first and second parts, the apparatus comprising: first processing means configured to create a thermal CFD model of the structure using 3D-CAD software, in which thermal CFD model a volume of the structure, encompassing the third part, a portion of the first part which is adjacent to and includes a boundary between the first and third parts, and a portion of the second part which is adjacent to and includes a boundary between the second and third parts, is replaced by a notional fourth part, which has a uniform thickness greater than or equal to twice the size of mesh used to mesh the first and second parts; second processing means for deriving the shape of the third part as deformed under load from structural analysis of a structural analysis model of the structure; third processing means for calculating a value for the thermal conductivity of the fourth part, based on a known value of the thickness of the fourth part, a known value of the thickness of the third part, the derived shape of the deformed third part, a known value of the thermal conductivity of the third part, and known values of the thermal conductivity of the portions of the first and second parts; and fourth processing means for carrying out thermal-CFD analysis of the thermal CFD model using the calculated thermal conductivity of the fourth part.

Preferably the third processing means are operable to: divide the fourth part into N contiguous regions, each region comprising a first section $a_i$, of thickness $l_{ai}$ and thermal conductivity $\lambda_{ai}$, and a second section $b_i$ of thickness $l_{bi}$ and thermal conductivity $\lambda_{bi}$, such that the total thickness of each ith region is $l_{ai}+l_{bi}$, where i is an integer and $1 \leq i \leq N$; and determine the thermal conductivity of the fourth part by adding the thermal conductivity value of each first section $a_i$ derived from the equation:

$$\lambda_{ai} = \frac{l_{ai}}{\frac{l_{ai} - l_{Ti}}{\lambda_A} + \frac{L_{Ti}/2}{\lambda_T}}$$

to the thermal conductivity value of each second section $b_i$ derived from the equation:

$$\lambda_{bi} = \frac{l_{bi}}{\frac{l_{bi} - l_{Ti}}{\lambda_B} + \frac{L_{Ti}/2}{\lambda_T}}$$

where under balanced load the third part has a thermal conductivity $\lambda_T$ and a thickness $l_{Ti}$ at the ith region and under unbalanced load the third part has a thickness $L_{Ti}$ at the ith region.

The inventors have realised that, although it is still necessary to use the correct geometrical CAD model for structural analysis, it is possible to reduce computational cost by performing thermal-CFD analysis separately using a thermal-CFD model in which a part such as a deformed thermal sheet is represented by its equivalent thermal conductivity rather than 3D mesh elements.

Advantageously, each small-scale part is removed from the 3D geometrical model and replaced with its equivalent thermal conductivity automatically to produce a thermal-CFD model for thermal-CFD analysis.

Reference will now be made, by way of example, to the accompanying drawings, in which:

Figure 1 (a) is a schematic diagram illustrating heat flux between two metal solids in a structure, and Figure 1(b) is a schematic diagram of a modification of the structure of Figure 1(a) in which a thermal sheet is interposed between the two metal solids;

Figure 2(a) is a schematic diagram illustrating deformation of the thermal sheet under uniform force, and Figure 2(b) is a schematic diagram illustrating deformation of the thermal sheet under non-uniform force;

Figure 3 shows a flowchart of a method for carrying out thermal CFD analysis of a structure based on a 3D-CAD model of the structure;

Figure 4 is a diagram of apparatus for carrying out the method of Figure 3;

Figure 5 shows a flowchart of a process for creating a thermal-CFD model of a structure for use in thermal-CFD analysis;

Figure 6(a) shows a thermal-CFD model created using the process of Figure 5, and Figure 6(b) shows the equivalent thermal circuit model;

Figure 7 is a schematic diagram illustrating a thermal sheet, which forms part of the structure, before structural analysis;

Figure 8 is a schematic diagram illustrating the thermal sheet of Figure 7 after structural analysis; and

Figure 9 is a diagram comparing a section of the thermal-CFD model of Figure 6 with a section of the actual model before deformation and a section of the actual model after deformation.

An embodiment of the present invention comprises a method of carrying out thermal computational fluid dynamics -thermal CFD - analysis on a structure comprising a first part, a second part and a deformable third part located between and in contact with each of the first and second parts. In this embodiment a thermal CFD model of the structure is created using 3D-CAD software, in which a volume of the structure, encompassing the third part, a portion of the first part which is adjacent to and includes a boundary between the first and third parts, and a portion of the second part which is adjacent to and includes a boundary between the second and third parts, is replaced by a notional fourth part, which has a thickness greater than or equal to twice the size of mesh used to mesh the first and second parts. The shape of the third part as deformed under load is then derived from structural analysis of a structural analysis model of the structure, and a value for the thermal conductivity of the fourth part is calculated, based on a known value of the thickness of the third part, the derived shape of the deformed third part, a known value of the thermal conductivity of the third part, and known values of the thermal conductivity of the portions of the first and second parts. Finally, thermal-CFD analysis of the thermal CFD model is carried out using the calculated thermal conductivity of the fourth part.

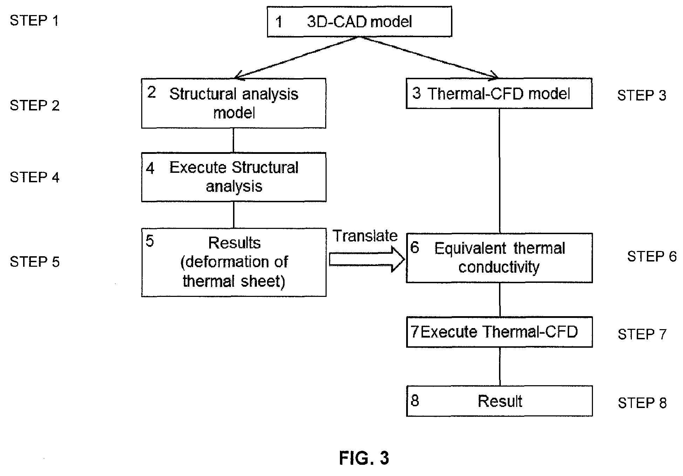

An embodiment of a method for carrying out thermal CFD analysis of a structure based on a 3D CAD model of the structure will now be explained with reference to Figure 3. In this particular embodiment the structure to be analysed includes a thermal sheet which is compressed between two solids.

In Step 1 of Figure 3 a 3D-CAD model of the structure is generated or imported from other software.

In Step 2 the 3D-CAD model is translated to a structural analysis model of the structure.

In Step 3 the 3D-CAD model is translated to a thermal-CFD analysis model using a procedure embodying the present invention, which will be described below.

In Step 4 structural analysis of the structural analysis model is carried out.

In Step 5, based on the result of the structural analysis carried out in Step 4, deformation of the thermal sheet in the structure is derived.

In Step 6 the equivalent thermal conductivity of the deformed thermal sheet obtained in Step 5 is derived, using a process which will be explained later.

In Step 7, thermal-CFD analysis of the thermal-CFD model is carried out using the equivalent thermal conductivity for the deformed thermal sheet obtained in Step 6.

In Step 8 the result of the thermal-CFD analysis is obtained, in which the influence of the deformation of the thermal sheet is included.

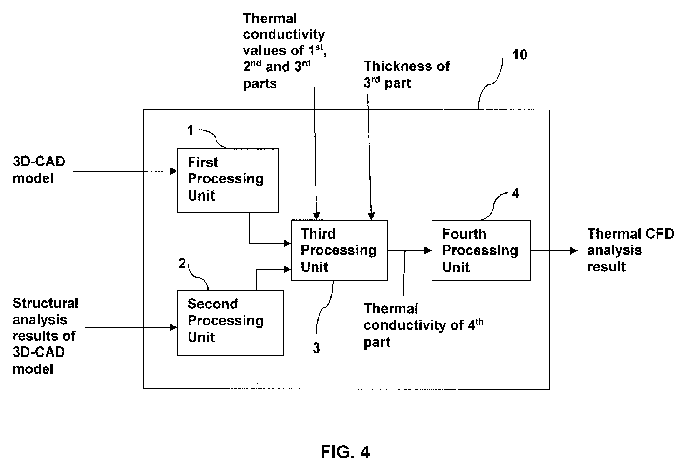

An embodiment of apparatus for carrying out a method embodying the present invention is shown in Figure 4. As shown in Figure 4, apparatus 10 comprises a first processing unit 1 (first processing means) configured to create a thermal CFD model of the structure using 3D-CAD software. The first processing unit 1 is operable to create a thermal CFD model in which a volume of the structure, encompassing the third part, a portion of the first part which is adjacent to and includes a boundary between the first and third parts, and a portion of the second part which is adjacent to and includes a boundary between the second and third parts, is replaced by a notional fourth part, which has a thickness greater than or equal to twice the size of mesh used to mesh the first and second parts. Apparatus 10 further comprises a second processing unit 2 (second processing means), configured to derive the shape of the third part as deformed under load from structural analysis of a structural analysis model of the structure, and a third processing unit 3 (third processing means),configured to calculate a value for the thermal conductivity of the fourth part, based on a known value of the thickness of the third part, the derived shape of the deformed third part, a known value of the thermal conductivity of the third part, and known values of the thermal conductivity of the portions of the first and second parts. The apparatus 10 further comprises a fourth processing unit 4 (fourth processing means) configured to carry out thermal-CFD analysis of the thermal CFD model using the calculated thermal conductivity of the fourth part.

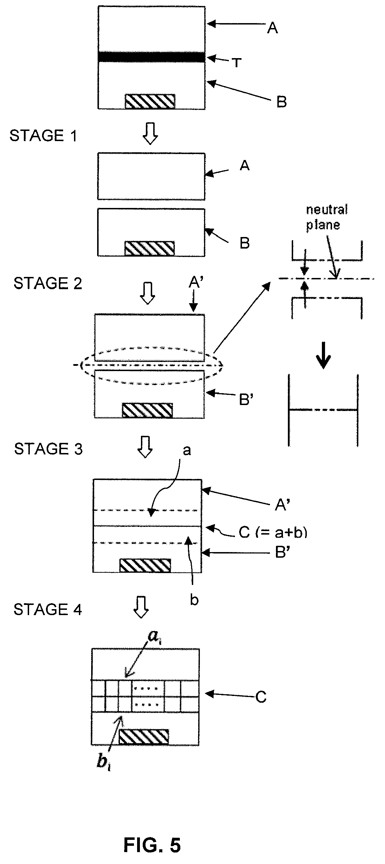

The detailed process of the creation of a thermal-CFD model using 3D-CAD software for use in the thermal-CFD analysis (step 3 in Figure 3) will now be described with reference to Figure 5.

The structure to be analysed comprises an upper solid, a lower solid and a thermal sheet located between and in contact with each of the upper and lower solids. A CAD model of the structure comprises a first part A representing the upper solid and having a first contact face, a second part B representing the lower solid and having a second contact face, and a third part T representing the thermal sheet.

The position of the neutral plane of the third part T relative to the first and second parts A, B is noted and the geometrical CAD model of the structure is modified so as to remove the third part T (stage 1). This may be done either by the user of the CAD software or automatically by software on the basis of information stored in a materials database (e.g. the name of the material property, a flag, thermal conductivity value, etc.).

The modified CAD model is then modified further by moving the first and second contact faces of the first and second parts A, B to the position previously occupied by the neutral plane of the third part T, creating modified first and second parts A', B' which meet at a contact plane positioned where the neutral plane of the third part T used to be (stage 2).

An arbitrary portion of the modified first part A' which is adjacent to the contact plane between A' and B' is then denoted a, and an arbitrary portion of the modified first part B' which is adjacent to the contact plane between A' and B' is then denoted b (stage 3). The thickness of each new portion a, b is larger than that of the third part T. The result a+b is a notional fourth part C which has a uniform thickness greater than or equal to the size of mesh used to mesh the first and second parts.

Then the thermal CFD model is completed by dividing each portion a and b respectively into N contiguous sections $a_i$, $b_i$ of arbitrary length, where i= 1, 2, ..., N and N is defined by the user of the software, for example such that there is no more than a 10% difference in length between adjacent sections (stage 4).

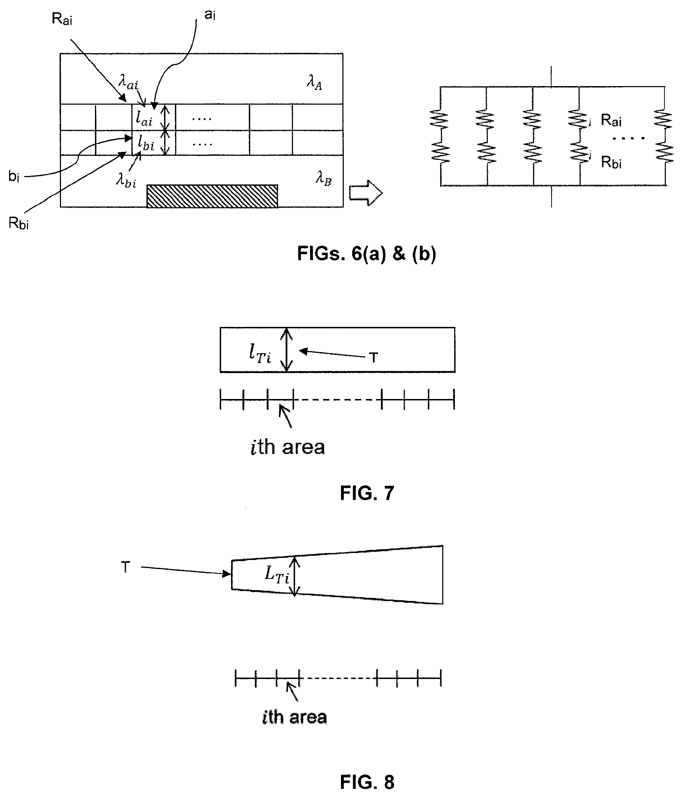

An embodiment of a process of determining the equivalent thermal conductivity of the deformed thermal sheet (step 6 in Figure 3) will now be described with reference to Figures 6, 7, 8 and 9.

Figure 6(a) shows a thermal-CFD model created using the process of Figure 5. As shown in Figure 6(a), the thicknesses of sections $a_i$ and $b_i$ are defined as $l_{ai}$ and $l_{bi}$ respectively. The heat conductivity of solid A is defined as $\lambda_A$ and the heat conductivity of solid B is defined as $\lambda_B$. The heat conductivity of section $a_i$ is defined as $\lambda_{ai}$ and the heat conductivity of section $b_i$ is defined as $\lambda_{bi}$. The thermal resistance of the section $a_i$ is defined as $R_{ai}$ and the thermal resistance of the section $b_i$ is defined as $R_{bi}$.

The thermal characteristics of the part C can be expressed as a thermal circuit model as shown in Figure 6(b).

Therefore, the thermal resistance $R_{total}$ at the part C is given as:

$$\frac{1}{R_{total}} = \sum_{i=1}^{N} \frac{1}{R_{ai} + R_{bi}} \quad \Rightarrow \quad R_{total} = \frac{1}{\sum_{i=1}^{N} \frac{1}{R_{ai} + R_{bi}}} \tag{1}$$

Figure 7 shows the thermal sheet T under balanced load, before structural analysis, divided into N regions i. The average thickness of thermal sheet T at the ith region is defined as $l_{Ti}$, and the heat conductivity of thermal sheet T is defined as $\lambda_T$.

Figure 8 shows the thermal sheet T under unbalanced load after structural analysis, divided into N regions i. The thickness of the thermal sheet T at the ith region derived from the structural analysis (step 5 of Figure 3) is defined as $L_{Ti}$.

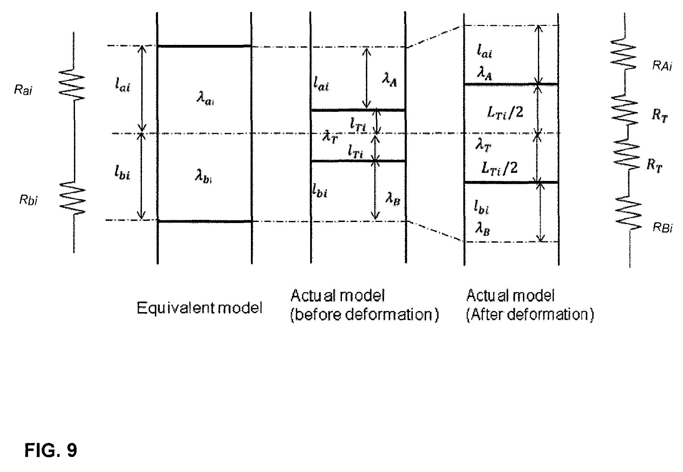

As shown in Figure 9, thermal resistance of the equivalent model needs to be the same as that of the actual model after deformation. That is:

$$R_{ai} = R_{Ai} + R_{Ti} \ , R_{bi} = R_{Ti} + R_{Bi} \tag{2}$$

where $R_{ai}$ is the thermal resistance of the section $a_i$, $R_{bi}$ is the thermal resistance of the section $b_i$, $R_{Ai}$ is the thermal resistance of the first part A, $R_{Bi}$ is the thermal resistance of the second part B, and $R_{Ti}$ is the thermal resistance of the third part T.

The thermal resistances can be defined as:

$$R_{ai} = \frac{l_{ai}}{\lambda_{ai}} \ , \ R_{Ai} = \frac{l_{ai} - l_{Ti}}{\lambda_A} \ , \ R_{Ti} = \frac{L_{Ti}/2}{\lambda_T} \tag{3}$$

(with similar equations for $R_{bi}$ and $R_{Bi}$ as for $R_{ai}$ and $R_{Ai}$ respectively).

Using the equations (2) and (3), equations (4) and (5) can be derived for the heat conductivities $\lambda_{ai}$ and $\lambda_{bi}$:

$$\lambda_{ai} = \frac{l_{ai}}{\frac{l_{ai} - l_{Ti}}{\lambda_A} + \frac{L_{Ti}/2}{\lambda_T}} \tag{4}$$

$$\lambda_{bi} = \frac{l_{bi}}{\frac{l_{bi} - l_{Ti}}{\lambda_B} + \frac{L_{Ti}/2}{\lambda_T}} \tag{5}$$

Since the thickness of part C is uniform, $l_{a1}, l_{a2}, ..., l_{aN}$ are the same. Additionally, $l_{b1}, l_{b2}, ..., l_{bN}$ are the same. Therefore the thickness $l_{ai}$ (where $l_{a1}=l_{a2}=l_{a3}= ... = l_{aN}$) of section $a_i$ can be defined as $l_a$ and the thickness $l_{bi}$ (where $l_{b1}=l_{b2}=l_{b3}= ... = l_{bN}$) of section $b_i$ can be described as $l_b$.

In addition $Rt_{otal}$ can be defined as:

$$R_{total} = \frac{l_a + l_b}{\lambda_{total}} \tag{6}$$

where $\lambda_{total}$ is the equivalent heat conductivity of the part C.

Using equations (1) and (6)

$$\frac{l_a + l_b}{\lambda_{total}} = \frac{1}{\sum_{i=1}^{N} \frac{1}{R_{ai} + R_{bi}}}$$

So the equivalent heat conductivity of the part C is:

$$\lambda_{total} = (l_a + l_b) \sum_{i=1}^{N} \frac{1}{R_{ai} + R_{bi}}$$

**Claims**

1. A method of carrying out thermal computational fluid dynamics - thermal CFD - analysis on a structure comprising a first part (A), a second part (B) and a deformable third part (T) located between and in contact with each of the first and second parts (A, B), wherein:

   a thermal CFD model of the structure is created using 3D-CAD software in which a volume of the structure, encompassing the third part (T), a portion of the first part (A) which is adjacent to and includes a boundary between the first and third parts (A, T), and a portion of the second part (B) which is adjacent to and includes a boundary between the second and third parts (B, T), is replaced by a notional fourth part (C), which has a uniform thickness greater than or equal to twice the size of mesh used to mesh the first and second parts (A, B); the shape of the third part (T) as deformed under load is derived from structural analysis of a structural analysis model of the structure;

a value for the thermal conductivity of the fourth part (C) is calculated, based on a known value of the thickness of the fourth part (C), a known value of the thickness of the third part (T), the derived shape of the deformed third part (T), a known value of the thermal conductivity of the third part (T), and known values of the thermal conductivity of the portions of the first and second parts (A, B); and

thermal-CFD analysis of the thermal CFD model is carried out using the calculated thermal conductivity of the fourth part (C).

2. A method as claimed in claim 1, wherein:

the fourth part (C) is divided into N contiguous regions, each region comprising a first section $a_i$, of thickness $l_{ai}$ and thermal conductivity $\lambda_{ai}$, and a second section $b_i$ of thickness $l_{bi}$ and thermal conductivity $\lambda_{bi}$, such that the total thickness of each ith region is $l_{ai}+l_{bi}$, where i is an integer and $1 \leq i \leq N$; and

the thermal conductivity of the fourth part (C) is determined by adding the thermal conductivity value of each first section $a_i$ derived from the equation:

$$\lambda_{ai} = \frac{l_{ai}}{\frac{l_{ai}-l_{Ti}}{\lambda_A} + \frac{L_{Ti}/2}{\lambda_T}}$$

and the thermal conductivity value of each second section $b_i$ derived from the equation:

$$\lambda_{bi} = \frac{l_{bi}}{\frac{l_{bi}-l_{Ti}}{\lambda_B} + \frac{L_{Ti}/2}{\lambda_T}}$$

where under balanced load the third part (T) has a thermal conductivity $\lambda_T$ and a thickness $l_{Ti}$ at the ith region and under unbalanced load (T) the third part has a thickness $L_{Ti}$ at the ith region.

3. Apparatus (10) for carrying out thermal computational fluid dynamics - thermal CFD - analysis on a structure comprising a first part (A), a second part (B) and a deformable third part (T) located between and in contact with each of the first and second parts (A, B), the apparatus comprising:

first processing means (1) configured to create a thermal CFD model of the structure using 3D-CAD software, in which thermal CFD model a volume of the structure, encompassing the third part (T), a portion of the first part (A) which is adjacent to and includes a boundary between the first and third parts (A, T), and a portion of the second part (B) which is adjacent to and includes a boundary between the second and third parts (B, T), is replaced by a notional fourth part (C), which has a thickness greater than or equal to twice the size of mesh used to mesh the first and second parts (A, B);

second processing means (2) for deriving the shape of the third part (C) as deformed under load from structural analysis of a structural analysis model of the structure;

third processing means (3) for calculating a value for the thermal conductivity of the fourth part, based on a known value of the thickness of the fourth part (C), a known value of the thickness of the third part (T), the derived shape of the deformed third part (T), a known value of the thermal conductivity of the third part (T), and known values of the thermal conductivity of the portions of the first and second parts (A, B); and

fourth processing means (4) for carrying out thermal-CFD analysis of the thermal CFD model using the calculated thermal conductivity of the fourth part (C).

4. Apparatus as claimed in claim 3, wherein: the third processing means (3) are operable to:

divide the fourth part (C) into N contiguous regions, each region comprising a first section $a_i$, of thickness $l_{ai}$

and thermal conductivity $\lambda_{ai}$, and a second section $b_i$ of thickness $l_{bi}$ and thermal conductivity $\lambda_{bi}$, such that the total thickness of each ith region is $l_{ai}+l_{bi}$, where i is an integer and $1 \le i \le N$; and
determine the thermal conductivity of the fourth part (C) by adding the thermal conductivity value of each first section $a_i$ derived from the equation:

$$\lambda_{ai} = \frac{l_{ai}}{\frac{l_{ai}-l_{Ti}}{\lambda_A} + \frac{L_{Ti}/2}{\lambda_T}}$$

to the thermal conductivity value of each second section $b_i$ derived from the equation:

$$\lambda_{bi} = \frac{l_{bi}}{\frac{l_{bi}-l_{Ti}}{\lambda_B} + \frac{L_{Ti}/2}{\lambda_T}}$$

where under balanced load the third part (T) has a thermal conductivity $\lambda_T$ and a thickness $l_{Ti}$ at the ith region and under unbalanced load the third part (T) has a thickness $L_{Ti}$ at the ith region.

Heat flux through contact interface

Solid A

Contact interface

Solid B

Heat flux from heat source

Heat source

(a) Solid A and Solid B contact each other.

Heat flux through thermal sheet

Thermal sheet

Thickness ~10 micro meters

Heat flux from heat source

Heat source

(b) Thermal sheet is inserted between Solid A and Solid B.

## FIGS. 1(a) & (b)

Balanced load

A

T

B

Heat source

(a)

Unbalanced load

A

T

B

Heat source

(b)

## FIGS. 2(a) & (b)

STEP 1 | 1    3D-CAD model

STEP 2 | 2    Structural analysis model | 3 Thermal-CFD model | STEP 3

STEP 4 | 4    Execute Structural analysis

STEP 5 | 5    Results (deformation of thermal sheet) | Translate | 6    Equivalent thermal conductivity | STEP 6

7 Execute Thermal-CFD | STEP 7

8    Result | STEP 8

**FIG. 3**

Thermal
conductivity
values of 1$^{st}$,
2$^{nd}$ and 3$^{rd}$
parts

Thickness of
3$^{rd}$ part

10

3D-CAD
model

1

**First
Processing
Unit**

4

**Third
Processing
Unit**

**Fourth
Processing
Unit**

Thermal CFD
analysis
result

2

Structural
analysis
results of
3D-CAD
model

**Second
Processing
Unit**

3

Thermal
conductivity of 4$^{th}$
part

**FIG. 4**

STAGE 1

STAGE 2

STAGE 3

STAGE 4

FIG. 5

**FIGs. 6(a) & (b)**

**FIG. 7**

**FIG. 8**

Equivalent model   Actual model
(before deformation)   Actual model
(After deformation)

FIG. 9